# EUROPEAN PATENT APPLICATION

(11) **EP 2 181 599 A2**
(43) Date of publication of application: **05.05.2010**
(21) Application number: 09011458.8
(22) Date of filing: 08.09.2009
(51) Int. Cl.: A21B 3/07

(54) **Mechanized apparatus for the preparation of pizzas**

(30) Priority: 30.10.2008 IT TO20080144
(71) Applicant: CMT Costruzioni Meccaniche e Tecnologia S.p.A., 12016 Peveragno CN (IT)
(72) Inventor: Tomatis, Stefano, 12016 Peveragno (CN) (IT)
(74) Representative: Spandonari, Carlo

(57) **Abstract**

The apparatus comprises a frame (12), an oven (20) having two pizza reception areas (30a, 30b) which are accessible through an inlet opening (28), and a pizza-holding arm (16) hinged to the frame (12) about a vertical axis (42) and supporting a pizza-holding shover (54) which is movable between a loading position outside the oven (20) and an unloading position inserted in the oven (20), under control of first motor means (50, 52). Second motor means (56, 58) can rotate the arm (16) at predetermined angular positions, in each of which the path of the shover (54) is directed to a respective pizza reception area (30a, 30b). A control unit (18) controls both the first motor means (44, 50, 52) with different speeds in the two directions, whereby the shover (54) slowly enters the oven while conveying a pizza and suddenly withraws from the oven to unload the pizza, and the second motor means (56, 58) for successively positioning the pizza-holding arm (16) at said predetermined angular positions.

## Description

The present invention relates to a mechanized apparatus for the preparation of pizzas, particularly for use in pizza-restaurants and self-service restaurants.

As known, in pizza-restaurants pizza is conventionally prepared to order by a pizza chef which, per each pizza, generally takes a premixed, leavened portion of dough, rolls it out, then arranges it on a baker's shovel, covers it with prepared condiments, such as minced mozzarella, tomato, anchovies, minced ham and/or various other condiments, and finally puts the resulting pizza into the oven.

In order to make the preparation of pizza less laborious and to reduce the use of skilled personnel, EP 1 168 926 of Applicant describes a highly automated machine for the preparation of pizzas, in which a horizontal, motorized shovel is driven to rotate by steps along a circular path in order to successively cooperate with a series of stations arranged along the path, in particular, a dough block dispenser, a pizza moulder adapted to roll the block out and to stretch it, a condiment dispenser, and an oven.

Alhough the above-described machine effectively achieves the desired aims of preparing and cooking high quality pizzas while substantially zeroing the human contribution, however it is rather cumbersome so that its installation is prohibitive in restaurants having a relatively small kitchen. It has been found in practice that, in these cases, a lower degree of automation would be accepted in exchange for a smaller and less expensive machine.

Therefore, it is a main object of the invention to provide a mechanized apparatus for the preparation of pizzas, by which pizzas can be prepared and cooked with a limited human conrtibution with respect to the manual preparation but which, at the same time, is smaller in size as well as much less expensive then the machine of the above-mentioned European Patent.

The above object and other advantages, which will better appear from the following description, are achieved by the invention with a mechanized apparatus for the preparation of pizzas having the features recited in claim 1, while the dependent claims state other advantageous, though secondary features of the invention.

The invention will be now described in more detail with reference to a preferred, non exclusive embodiment, shown by way of non-limiting example in the attached drawings, wherein:
Fig. 1 is a broken-away, plan view of the mechanized apparatus for the preparation of pizzas according to the invention;
Fig. 2 is a perspective view which separately shows a component of the apparatus of Fig. 1;
Figs. 3 and 4 are diagrammatical, plan views showing the apparatus in two different operative configurations.

With reference to the above Figures, a mechanized apparatus 10 according to the invention for the preparation of pizzas comprises a frame 12 which basically supports a refrigerator 12 for condiments, a horizontal pizza-holding arm 16, and a control unit 18, each of which components will be described in more detail below. Apparatus 10 also comprises an oven 20 (which is of a known type and, therefore, is only diagrammatically shown in the Figures) which is arranged adjacent to frame 12 in order to receive a dressed, though still raw, pizza from pizza-holding arm, and a bench 22 on which a pizza chef (not shown) can prepare the pizza. All these components will also be described in more detail below.

Oven 20 comprises a housing 24 having an outlet opening 26 on its back side, as well as an inlet opening 28 on its front side, which is accessible via a tunnel 29 that is frontally fixed to the oven. Oven 20 is internally provided with known heating means (not shown), e.g., of the type based on electical resistors. The inner room of oven 20 can house two pizzas arranged side-by-side in respective reception areas 30a, 30b. A pair of curved, expulsion arms 32, 34 are mounted within housing 24 and are driven by actuator means (not shown) to rotate about respective axes 36, 38. A platform is defined on the upper side of oven 20, on which the cooked pizzas can be temporarily stored, waiting for the subsequent delivery to the consumer.

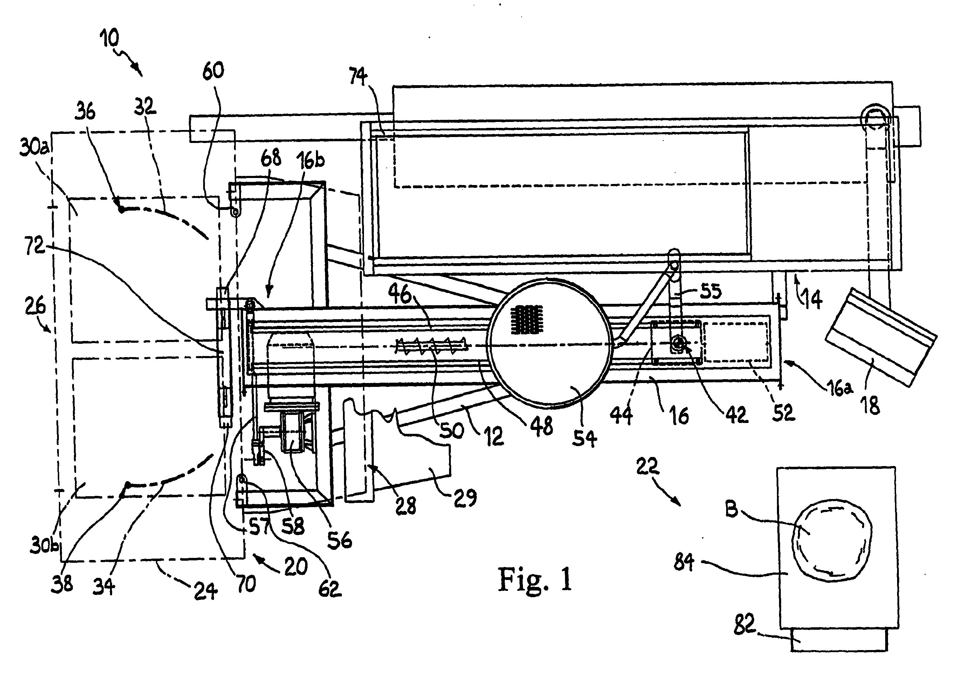

Pizza-holding arm 16 has a first end 16a hinged to the frame about a vertical axis 42, and supports a slide 44 that is movable along longitudinal guides 46, 48 under control of a screw mechanism 50 (diagrammatically shown in Fig. 1) which is operable in both directions by a first motor 52. First motor 52 is housed within the pizza-holding arm and is operatively connected to control unit 18. Slide 44 supports a perforated, horizontal shover 54 via a bracket 55, on which a pizza can be laid down.

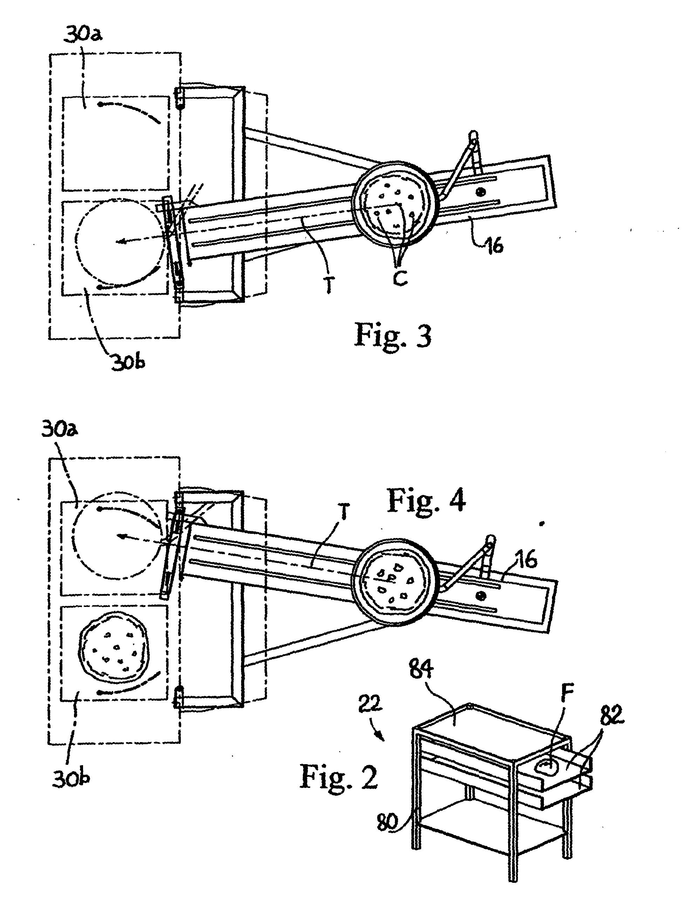

A free end 16b of pizza-holding arm 16 is operatively connected to a ratio-motor 56 fixed to frame 12, via a linkage including a connecting rod 57 hinged to a crank 58. Ratio-motor 56 is also operatively connected to control unit 18, and is operable for successively positioning arm 16 at two predetermined angular positions (Figs. 3 and 4), in each of which the horizontal path T (Figg. 3 and 4) defined by shover 54 along guides 46, 46 leads to a respective one of the reception areas 30a, 30b of oven 20, which are accessible through the inlet opening.

Frame 12 bears a pair of position sensors 60, 62 for transmitting a stop signal to the control unit when pizza-holding arm 16 reaches one of the above-cited, predetermined angular positions. To this purpose, position sensors 60, 62 are arranged in such a way as to detect a pair of detection projections 68, 70 supported at the opposite ends of a horizontal rod 72, which is fixed crosswise to the free end of arm 16. Detection projections 68, 70 are adjustable by length to allow accurate setting of the point of intervention of sensors 60, 62.

Refrigerator 14 for condiments is of a known type comprising a prismatic case 74 which is internally provided with known cooling means (not shown) and with a plurality of compartments (not shown) accessible from the upper side of the case. Conventional refrigerators of this type are on the market and, therefore, no further description will be given about it.

Control unit 18 is programmable in a conventional way in the field to pilot motors 52 and 56 and to coordinate their movements, as well as to switch on/off oven 20 and refrigerator 14 for condiments, as described below with regard to the operation of the apparatus. Control unit 18 is preferably provided with start/stop push buttons (not shown) and with buttons for selecting various parameters, such as the temperature of the oven, the cooking time, etc.

Bench 22 is advantageously arranged by side of frame 12 and comprises a metal structure 80 supporting several shelves such as 82, on which dough blocks F can be stored, with an uppermost shelf 84 on which the pizza chef can lay down the block F and roll it out manually or by means of an auxiliary rolling pin (not shown).

The operation of mechanized apparatus 10 according to the invention will be now described.

The pizza chef (not shown) takes a block F from a shelf 82 of bench 22, lays it down on uppermost shelf 84, and then skillfully rolls it out into the typical flat, discoidal shape forming the base B (Fig. 1) of the pizza. Then, the pizza chef conveys the base of the pizza onto horizontal shover 54 resting outside the oven at its withdrawn, loading position shown in Fig. 1, and seasons it with the required condiments C (Fig. 3) taken from the refrigerator.

After this seasoning operation, the preparation of the pizza becomes completely automated. The pizza chef set pizza-holding arm 16 going by acting on control unit 18, which is programmed control slide 44 to move forward at a first, relatively low speed, with arm 16 resting at one of its predetermined angular positions (couterclock-rotated position in Fig. 3), whereby shover 54 enters oven 20 through inlet opening 28 at a respetive one of the two reception areas (area 30b in Fig. 3). Now, first motor 52 is driven in the opposite direction at a second, higher speed, whereby shower 54 suddenly withdraws from the oven, thereby unloading the pizza by inertia.

While pizza-holding arm 16 is ready to perform a new working cycle, the pizza in the oven is cooked and, after a predetermined cooking time set by the software, the corresponding expulsion arm 32 or 34 pushes the pizza out of the oven, so that it can be taken and, if required, temporarily stored on platform 39 of oven 20.

In the following working cycle, pizza-holding arm 16 carries out the same steps of the previous cycle, but control unit 18 is programmed to rotate the arm to the other, predetermined angular position, so that the pizza is unloaded on the other, free reception area (area 30a in Fig. 4).

As described above and shown in Figs. 3 and 4, detection projections 68, 70 respectively shade sensors 60, 62 when pizza-holding arm 16 reaches the corresponding predetermined angular positions, whereby arm 16 is stopped at the desired position.

A preferred embodiment of the invention has been described herein, but of course many changes may be made by a person skilled in the art within the scope of the claims, by means of alternative, though equivalent mechanical solutions. In particular, bench 22 is a useful, though non-indispensable, component of the invention, because the dough blocks could be stored and processed apart from the apparatus. Moreover, the oven could be provided with more than two reception areas for pizzas, e.g., three or even four reception areas; in this case, control unit 18 should be reprogrammed accordingly and the system of sensors associated to pizza-holding arm 16 should be redesigned to include a corresponding number of predetermined angular positions, with changes which will be obvious to the person skilled in the art. Furthermore, it is evident that, although the pizza-holding shover shoudl be substantially horizontal, it could be slightly inclined to facilitate the unloading of the pizza into the oven.

## Claims

1. A mechanized apparatus for the preparation of pizzas, **characterized in that** it comprises:
- a frame (12),
- an oven (20) arranged adjacent to the frame and having at least two pizza reception areas (30a, 30b) which are accessible through an inlet opening (28),
- a pizza-holding arm (16) hinged to said frame (12) about a vertical axis (42) and supporting a substantially horizontal pizza-holding shover (54), which is movable between a loading position outside the oven (20) and an unloading position inserted in the oven (20) through said inlet opening (28), under control of first motor means (50, 52),
- second motor means (56, 58) which are connected to rotate said pizza-holding arm (16) at predetermined angular positions, in each of which the path of the shover (54) is directed to a respective one of said pizza reception areas (30a, 30b), and
- a control unit (18) which is programmed to control said first motor means (50, 52) with different speeds in the two directions, whereby the shover (54) slowly enters the oven for conveying a pizza and suddenly withraws from the oven for unloading the pizza, as well as said second motor means (56, 58) for successively positioning said pizza-holding arm (16) at said predetermined angular positions.

2. The apparatus of claim 1, **characterized in that** said shover (54) is supported on a slide (44) which is driven do move along horizontal rectilinear guides (46, 48) integral with said pizza-holding drum (16) by said first motor means (50, 52).

3. The apparatus of claim 2, **characterized in that** said first motor means comprise a screw mechanism (50) operated in the two directions by a first motor (52).

4. The apparatus of any of claims 1 to 3, **characterized in that** said second motor means comprise a second motor (56) integral with the frame and operatively connected to the pizza-holding arm via a linkage including a connecting rod (57) hinged to a crank (58).

5. The apparatus of any of claims 1 to 4, **characterized in that** it comprises sensor means connected to transmit a stop signal to the control unit (18) when the pizza-holding arm (16) reaches one of said predetermined angular positions.

6. The apparatus of claim 5, **characterized in that** said sensor means comprise one position sensor (60, 62) per each of said predetermined angular positions, which is arranged to detect a respective projection (64, 66) integral with the pizza-holding arm (16) and adjustable by position to allow the setting of the point of intervention of the sensor.

7. The apparatus of claim 6, **characterized in that** it comprises two of said sensors (60, 62), as well as two of said projections (70, 72) supported at adjustable positions at the opposite ends of a horizontal rod (72) which is attached crosswise to the arm.

8. The apparatus of any of claims 1 to 7, **characterized in that** it comprises a refrigerator (14) for condiments.

9. The apparatus of any of claims 1 to 8, **characterized in that** said oven (20) is provided with pizza expulsion means (32, 34) operable by said control unit (18) at the end of the cooking.

10. The apparatus of any of claims 1 to 9, **characterized in that** it comprises a bench (22) arrangeable by side of said frame (12) an provided with a plurality of shelves (82, 84).
